# EUROPÄISCHE PATENTANMELDUNG

(11) **EP 3 530 899 A1**
(43) Veröffentlichungstag der Anmeldung: **28.08.2019**
(21) Anmeldenummer: 19157132.2
(22) Anmeldetag: 14.02.2019
(51) Int. Cl.: F01P 7/16

(54) **KÜHLSYSTEM UND BRENNKRAFTMASCHINE**

(30) Priorität: 27.02.2018 DE 102018104409
(71) Anmelder: VOLKSWAGEN AKTIENGESELLSCHAFT, 38440 Wolfsburg (DE)
(72) Erfinder: LOOF, Holger, 38173 Sickte (DE); HARTMANN, Jana, 38440 Wolfsburg (DE); HOFFMANN, Bodo, 38448 Wolfsburg (DE); KIEL, Marco, 39116 Magdeburg (DE)
(74) Vertreter: Bungartz, Florian

(57) **Zusammenfassung**

Ein Kühlsystem einer Brennkraftmaschine umfasst jeweils eine Mehrzahl von Komponenten in Form von Wärmequellen, Kühlmittelpumpen (30, 32, 56), Stellvorrichtungen (40, 42, 44) und Temperatursensoren (46, 50, 60), die über Kühlmittelleitungen fluidleitend miteinander verbunden sind, wobei eine Mehrzahl von Kühlkreisen, die jeweils mindestens eine der verschiedenen Komponenten umfassen, ausgebildet sind. Weiterhin ist eine Steuerungsvorrichtung (80) vorgesehen, die signalleitend mit zumindest einem der Temperatursensoren (46, 50, 60), mit zumindest einer der Kühlmittelpumpen (30, 32, 56) und mit zumindest einer der Stellvorrichtungen (40, 42, 44) verbunden ist. In der Steuerungsvorrichtung (80) sind
- Informationen über die Zuordnung der einzelnen Komponenten zu den verschiedenen Kühlkreisen sowie deren konkrete Anordnung relativ zueinander in den einzelnen Kühlkreisen,
- Informationen darüber, welche der Kühlmittelpumpen (30, 32, 56) im Betrieb einen Kühlmittelstrom in den einzelnen Kühlkreisen bewirkt,
- Informationen darüber, mittels welcher oder welchen Stellvorrichtungen (40, 42, 44) ein Mengenstrom des Kühlmittels durch die einzelnen Wärmequellen einstellbar ist; und
- Informationen über jeweils eine Solltemperatur für die Wärmequellen gespeichert. Weiterhin ist die Steuerungsvorrichtung derart ausgebildet, dass diese automatisch durch entsprechende Ansteuerung der jeweiligen Kühlmittelpumpe(n) (30, 32, 56) und Stellvorrichtung(en) (40, 42, 44) einen zur Erreichung der Solltemperaturen erforderlichen Mengenstrom von Kühlmittel durch die Wärmequellen einstellt.

## Beschreibung

Die Erfindung betrifft ein Kühlsystem, eine Brennkraftmaschine mit einem solchen Kühlsystem und ein Verfahren zum Betrieben einer solchen Brennkraftmaschine.

Brennkraftmaschinen für Kraftfahrzeuge weisen in der Regel ein Kühlsystem auf, in dem ein Kühlmittel mittels einer oder mehrerer Kühlmittelpumpen in mindestens einem Kühlkreis gepumpt wird und dabei Wärmeenergie von in den Kühlkreis integrierten Komponenten, insbesondere einem Verbrennungsmotor sowie einem Motorölkühler, einem Getriebeölkühler, einem Kühler eines Abgasturboladers und/oder einem Ladeluftkühler, aufnimmt. Diese Wärmeenergie wird anschließend in mindestens einem Kühlmittelkühler sowie zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Kühlsysteme für Brennkraftmaschinen in unterschiedlichen Ausgestaltungsformen sind in der DE 11 2014 006 161 T5, der US 2013/0333863 A1 und der US 2017/0028813 A1 beschreiben.

Der Erfindung lag die Aufgabe zugrunde, die Entwicklung komplexer Kühlsysteme in mehreren, sich voneinander teilweise unterscheidenden Ausgestaltungen für unterschiedliche Verwendungen, d.h. für unterschiedliche Brennkraftmaschinen und/oder unterschiedliche Kraftfahrzeuge, zu vereinfachen.

Diese Aufgabe wird mittels eines Kühlsystems gemäß dem Patentanspruch 1 gelöst. Eine Brennkraftmaschine mit einem solchen Kühlsystem und ein Verfahren zum Betreiben einer solchen Brennkraftmaschine sind Gegenstände der Patentansprüche 8 und 9. Vorteilhafte Ausgestaltungsformen des erfindungsgemäßen Kühlsystems und der erfindungsgemäßen Brennkraftmaschine sowie bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein Kühlsystem mit jeweils einer Mehrzahl von Komponenten in Form von Wärmequellen, Kühlmittelpumpen, Stellvorrichtungen und Temperatursensoren, die über Kühlmittelleitungen fluidleitend miteinander verbunden sind, vorgesehen, wobei eine Mehrzahl von Kühlkreisen, die jeweils mindestens eine der verschiedenen genannten Komponenten umfassen, ausgebildet sind, und mit einer Steuerungsvorrichtung, die signalführend mit zumindest einem der und vorzugsweise allen Temperatursensoren, mit zumindest einer der und vorzugsweise allen Kühlmittelpumpen und mit zumindest einer der Stellvorrichtungen verbunden ist. Dabei ist weiterhin vorgesehen, dass in der Steuerungsvorrichtung
- Informationen über die Zuordnung der einzelnen Komponenten zu den verschiedenen Kühlkreisen sowie deren konkrete Anordnung relativ zueinander in den einzelnen Kühlkreisen,
- Informationen darüber, welche der Kühlmittelpumpen im Betrieb einen Kühlmittelstrom in den einzelnen Kühlkreisen bewirkt,
- Informationen darüber, mittels welcher oder welchen Stellvorrichtungen ein Mengenstrom des Kühlmittels durch die einzelnen Wärmequellen einstellbar ist und
- Informationen über jeweils eine Solltemperatur für die Wärmequellen gespeichert sind. Die Steuerungsvorrichtung ist weiterhin derart ausgebildet, dass diese automatisch durch entsprechende Ansteuerungen der jeweiligen Kühlmittelpumpe(n) und Stellvorrichtung(en) einen zur Erreichung der Solltemperaturen erforderlichen Mengenstrom von Kühlmittel durch die einzelnen Wärmequellen einstellt.

Die erfindungsgemäße Ausgestaltung eines Kühlsystems ermöglicht, das Kühlsystem anzupassen, ohne dass dafür die Steuerungsvorrichtung beziehungsweise eine darin gespeicherte Steuerungssoftware neu konfiguriert werden müsste, weil diese die sich aus der Anpassung des Kühlsystems ergebenden Änderungen hinsichtlich der Ansteuerung der Kühlmittelpumpe(n) und der Stellvorrichtung(en) automatisch berechnen kann. Beispielsweise kann sich durch die Anpassung des Kühlsystems die Zuordnung der einzelnen Komponenten zu den verschiedenen Kühlkreisen und/oder deren konkrete Anordnung relativ zueinander ändern, was dementsprechend in der Störungsvorrichtung gespeichert wird und dadurch für die automatische Ansteuerung der Kühlmittelpumpe(n) und der Stellvorrichtung(en) ausgewertet werden kann. Beispielsweise können zwei Wärmequellen A und B hintereinander in einen Kühlkreis, der von einer bestimmten Kühlmittelpumpe mit Kühlmittel versorgt wird, integriert sein. Die Temperatur des Kühlmittels am Einlass der zweiten Wärmequelle B hängt dabei von der Temperatur des Kühlmittels am Auslass der ersten Wärmequellen A ab. Werden die beiden Wärmequellen A und B hinsichtlich ihrer relativen Anordnung im Kühlkreis vertauscht, hängt dann die Temperatur am Einlass der Wärmequelle A von der Temperatur des Kühlmittels am Auslass der Wärmequelle B ab. An den physikalischen Eigenschaften der Wärmequellen A und B und ihrem jeweiligen Kühlleistungsbedarf hat sich infolge dieser neuen Anordnung jedoch nichts geändert. Infolge der geänderten relativen Anordnung der Wärmequellen kann jedoch für die Realisierung der verschiedenen Kühlleistungsbedarfe ein geänderter Mengenstrom des Kühlmittels in dem betrachteten Kühlkreis erforderlich sein, was infolge einer entsprechenden Ansteuerung der Kühlmittelpumpe mittels der Steuerungsvorrichtung automatisch eingestellt werden kann.

Die erfindungsgemäße Ausgestaltung eines Kühlsystems kann insbesondere dann vorteilhaft umgesetzt werden, wenn das Kühlsystem in mehreren alternativen Betriebszuständen betreibbar ist, in denen verschiedene der Kühlkreise durchströmt werden, wobei für jeden der Betriebszustände die entsprechenden Informationen in der Steuerungsvorrichtung gespeichert sind. Dabei kann vorzugsweise vorgesehen sein, dass die Steuerungsvorrichtung derart ausgebildet ist, dass diese in Abhängigkeit von Messwerten der Temperatursensoren die verschiedenen Betriebszustände automatisch einstellt.

Ein erfindungsgemäßes Kühlsystem kann vorzugsweise als Wärmequellen mehrere oder alle der folgenden Komponenten: einen Zylinderkopf eines Verbrennungsmotors, ein Zylindergehäuse des Verbrennungsmotors, einen Abgasturbolader, einen AGR-Kühler, einen Motorölkühler, einen Getriebeölkühler, einen Ladeluftkühler, ein Dosierventil für ein Reduktionsmittel umfassen.

Auch kann ein erfindungsgemäßes Kühlsystem vorzugsweise eine oder mehrere Wärmesenken, insbesondere einen oder mehrere Kühlmittelkühler und/oder einen Heizungswärmetauscher umfassen. Gegebenenfalls kann es vorteilhaft sein, wenn in jeden der Kühlkreise mindestens eine der Wärmesenken integriert ist.

Weiterhin bevorzugt kann dann vorgesehen sein, dass das Kühlsystem
- einen ersten Kühlkreis, der mehrere oder alle der folgenden Komponenten: den Zylinderkopf, einen dem Zylinderkopf zugeordneten ersten Temperatursensor, den Abgasturbolader, den AGR-Kühler, den Heizungswärmetauscher, eine vorzugsweise elektromotorisch antreibbar Zusatzkühlmittelpumpe, den Motorölkühler;
- einen zweiten Kühlkreis, der mehrere oder alle der folgenden Komponenten: den Zylinderkopf, den dem Zylinderkopf zugeordneten ersten Temperatursensor, den Abgasturbolader, den AGR-Kühler, den Heizungswärmetauscher, die Zusatzkühlmittelpumpe, den Motorölkühler, den oder einen ersten der Kühlmittelkühler;
- einen dritten Kühlkreis, der mehrere oder alle der folgenden Komponenten: den Zylinderkopf, den dem Zylinderkopf zugeordneten ersten Temperatursensor, den Motorölkühler, den (ersten) Kühlmittelkühler, eine vorzugsweise direkt oder indirekt von einer Abtriebswelle des Verbrennungsmotors antreibbare Hauptkühlmittelpumpe;
- einen vierten Kühlkreis, der mehrere oder alle der folgenden Komponenten: das Zylindergehäuse, einen dem Zylindergehäuse zugeordneten zweiten Temperatursensor, ein dem Zylindergehäuse zugeordnetes Thermostatventil, die Hauptkühlmittelpumpe; und
- einen fünften Kühlkreis, der mehrere oder alle der folgenden Komponenten: den Abgasturbolader, den AGR-Kühler, den Heizungswärmetauscher, die Zusatzkühlmittelpumpe umfasst.

Ein solches erfindungsgemäßes Kühlsystem kann zudem einen sechsten Kühlkreis umfassen, der mehrere oder alle der folgenden Komponenten: den Ladeluftkühler, das Dosierventil für das Reduktionsmittel, eine Nebenkühlmittelpumpe, einen zweiten Kühlmittelkühler umfasst. Die Kühlkreise 1 bis 5 können dabei weiterhin bevorzugt ein erstes Teilkühlsystem und der sechste Kühlkreis ein zweites Teilkühlsystem ausbilden, wobei das erste Teilkühlsystem und das zweite Teilkühlsystem voneinander separiert sind. Als "separierte" Ausbildung der Teilkühlsysteme wird dabei verstanden, dass diese keinen integralen Abschnitt, d.h. keinen Abschnitt, der sowohl Teil eines Kühlkreises des einen Teilkühlsystems als auch Teil eines Kühlkreises des anderen Teilkühlsystems ist, umfassen. Die separierten Kühlkreise oder Teilkühlsysteme können dabei jedoch mit einem gemeinsamen Ausgleichsbehälter, insbesondere über jeweils mindestens eine Verbindungsleitung sowie jeweils eine Entlüftungsleitung, indirekt verbunden sein. Als "Ausgleichsbehälter" wird dabei ein Reservoir für das Kühlmittel des Kühlsystems verstanden, das dazu dient, insbesondere temperaturbedingte Ausdehnungen des Kühlmittels durch eine Veränderung des Füllstands des Kühlmittels in dem Ausgleichsbehälter auszugleichen. Dazu kann ein solcher Ausgleichsbehälter insbesondere teilweise mit dem Kühlmittel und teilweise mit einem Gas, insbesondere Luft, gefüllt sein. Eine dazugehörige Entlüftungsleitung kann vorzugsweise in einen Abschnitt des Ausgleichsbehälters münden, in dem das Gas vorhanden ist, während eine dazugehörige Verbindungsleitung in einen das Kühlmittel aufnehmenden Abschnitt mündet, um ein Überströmen von Kühlmittel zwischen dem/den Kühlkreis(en) und dem Ausgleichsbehälter mit dem primären Ziel der Kompensation einer temperaturbedingten Ausdehnung des Kühlmittels, gegebenenfalls auch für ein erstmaliges oder im Rahmen von Wartungstätigkeiten vorgesehenes Befüllen des (Gesamt-)Kühlsystems mit dem Kühlmittel, zu ermöglichen.

Eine erfindungsgemäße Brennkraftmaschine umfasst zumindest einen Verbrennungsmotor und ein erfindungsgemäßes Kühlsystem. Der Verbrennungsmotor kann dabei bevorzugt ein Zylindergehäuse und einen Zylinderkopf umfassen, die über jeweils mindestens einen darin ausgebildeten Kühlmittelkanal in das Kühlsystem integriert sind.

Ein vorteilhaftes Verfahren zum Betreiben einer erfindungsgemäßen Brennkraftmaschine, die ein Kühlsystem aufweist, das in der beschriebenen Weise in alternativen Betriebszuständen betreibbar ist und das zudem die genannten Kühlkreise 1 bis 5 und, sofern vorhanden, auch den sechsten Kühlkreis umfasst, kann dadurch gekennzeichnet sein, dass (vorzugsweise ausschließlich) entweder der erste oder zweite Kühlkreis und zusätzlich gegebenenfalls, d.h. sofern vorhanden und zudem optional, der sechste Kühlkreis genutzt wird/werden, wenn der Verbrennungsmotor nicht betrieben wird. Dadurch kann entweder eine Nachheizfunktionalität (bei einer Nutzung des ersten Kühlkreises) realisiert werden, in der dann Wärmeenergie, die noch in den Komponenten dieses Kühlkreises gespeichert ist, über das geförderte Kühlmittel in dem Heizungswärmetauscher, der ebenfalls Bestandteil des ersten Kühlkreises ist, an zur Temperierung eines Innenraums eines Kraftfahrzeugs zu nutzende Umgebungsluft übertragen werden kann. Oder es kann eine Nachkühlfunktionalität (bei Benutzung des zweiten Kühlkreises) realisiert werden, wodurch über das weiterhin geförderte Kühlmittel Wärmeenergie aus einzelnen, in den zweiten Kühlkreis integrierten Komponenten, insbesondere dem Zylinderkopf des Verbrennungsmotors und/oder dem Abgasturbolader, abgeführt und in dem (ersten) Kühlmittelkühler an die Umgebungsluft übertragen werden kann. Dadurch kann ein lokales Überhitzten von in diesen Komponenten ruhendem Kühlmittel vermieden werden. Infolge des vorzugsweise vorgesehenen elektromotorischen Antriebs der Zusatzkühlmittelpumpe, die Bestandteil sowohl des ersten als auch des zweiten Kühlkreises ist, ist ein solcher Betrieb des Kühlsystems auch bei nicht betriebenem Verbrennungsmotor möglich.

Weiterhin kann vorgesehen sein, dass (vorzugsweise ausschließlich) der erste Kühlkreis und gegebenenfalls, d.h. sofern vorhanden und zudem optional, der sechste Kühlkreis genutzt wird/werden, wenn der Verbrennungsmotor in einer Kaltstart-Warmlaufphase, d.h. bei einer unter einem definierten Grenzwert (z.B. 90°C) liegenden Temperatur des Kühlmittels am Kühlmittelauslass des Zylinderkopfs und mit einer unter einem Grenzwert liegenden Lastanforderung, betrieben wird. Dadurch kann erreicht werden, dass die in insbesondere dem Zylinderkopf und gegebenenfalls auch dem Abgasturbolader, bei denen es sich um die sich nach einem Kaltstart am schnellsten erwärmenden Komponenten der Brennkraftmaschine handeln kann, anfallende Wärmeenergie in vorteilhafter Weise genutzt werden, um infolge eines Wärmetauschs in dem Heizungswärmetauscher ein möglichst schnelles Aufwärmen eines Innenraums eines Kraftfahrzeugs zu erreichen. Gleichzeitig kann eine Durchströmung des Zylindergehäuses verhindert sein, wodurch für dieses ein möglichst schnelles Aufwärmen erreicht werden kann, da aus den Brennräumen des Verbrennungsmotors in das Zylindergehäuse übergegangene Wärmeenergie nicht mittels Kühlmittels, das den Kühlmittelkanal des Zylindergehäuses durchströmt hat, abgeführt wird.

Und schließlich kann vorgesehen sein, dass (vorzugsweise ausschließlich) die Kühlkreise 3 bis 5 und gegebenenfalls, d.h. sofern vorhanden und zudem optional, der sechste Kühlkreis genutzt werden, wenn der Verbrennungsmotor in einem von der Kaltstart-Warmlaufphase abweichenden Betriebszustand betrieben wird. Dabei können sämtliche der Komponenten des Kühlsystems von dem Kühlmittel durchströmt werden.

Die Erfindung betrifft auch ein Kraftfahrzeug mit einer erfindungsgemäßen Brennkraftmaschine, die insbesondere zur direkten oder indirekten Bereitstellung der Fahrantriebsleistung für das Kraftfahrzeug vorgesehen ist. Bei einem erfindungsgemäßen Kraftfahrzeug kann es sich insbesondere um ein radbasiertes und nicht schienengebundenes Kraftfahrzeug (vorzugsweise ein PKW oder LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausgestaltungsbeispiels näher erläutert. In den Zeichnungen zeigt:
- Fig. 1:: ein erfindungsgemäßes Kraftfahrzeug
- Fig. 2:: eine erfindungsgemäße Brennkraftmaschine in schematischer Darstellung;
- Fig. 3:: ein erster Kühlkreis eines Kühlsystems der Brennkraftmaschine;
- Fig. 4:: ein zweiter Kühlkreis des Kühlsystems der Brennkraftmaschine;
- Fig. 5:: ein dritter Kühlkreis des Kühlsystems der Brennkraftmaschine;
- Fig. 6:: ein vierter Kühlkreis des Kühlsystems der Brennkraftmaschine;
- Fig. 7:: ein fünfter Kühlkreis des Kühlsystems der Brennkraftmaschine; und
- Fig. 8:: ein sechster Kühlkreis des Kühlsystems der Brennkraftmaschine.

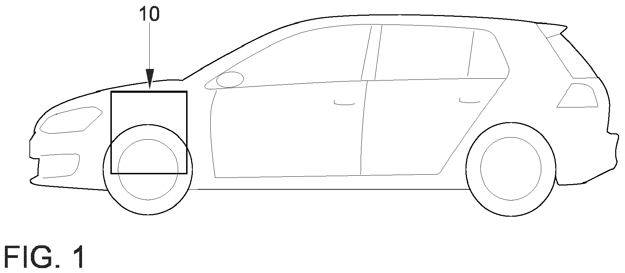

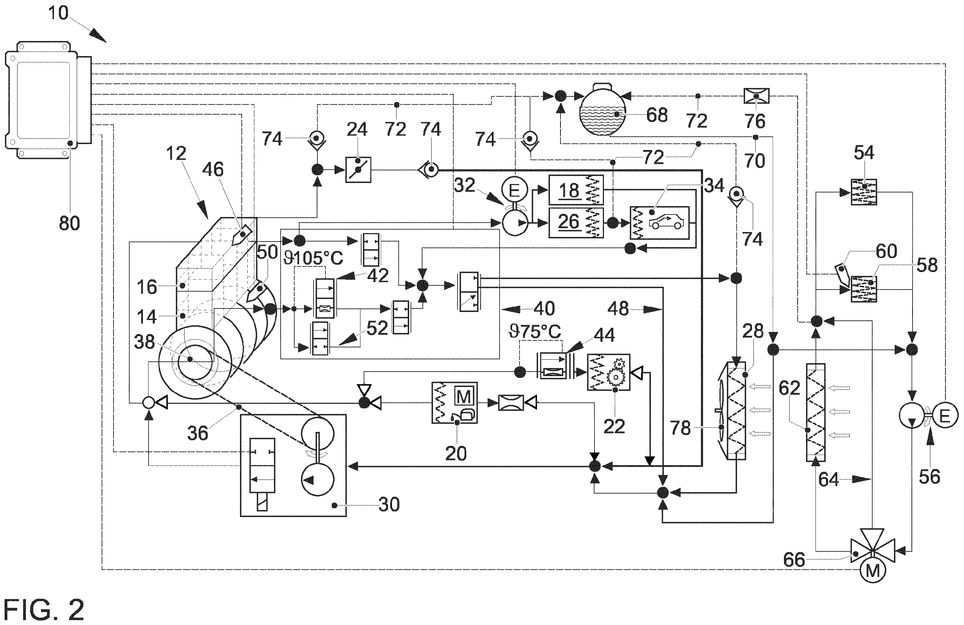

Die Fig. 1 zeigt in vereinfachter Darstellung ein erfindungsgemäßes Kraftfahrzeug mit einer erfindungsgemäßen Brennkraftmaschine 10. Eine solche Brennkraftmaschine 10 kann gemäß der Fig. 2 einen Verbrennungsmotor 12 aufweisen, der beispielsweise als nach dem Diesel-Prinzip arbeitender Hubkolbenmotor ausgebildet sein kann und der ein Zylindergehäuse 14 mit darin ausgebildeten Zylindern sowie einen Zylinderkopf 16 umfasst. Weiterhin weist die Brennkraftmaschine 10 gemäß der Fig. 2 noch ein Kühlsystem mit einem Hauptkühlsystem als erstem Teilkühlsystem und einem Nebenkühlsystem als zweitem Teilkühlsystem auf.

Das Hauptkühlsystem dient einer Kühlung des Verbrennungsmotors 12, von Motoröl zur Schmierung des Verbrennungsmotors 12, von Getriebeöl eines dem Verbrennungsmotor 12 zugeordneten, manuellen oder automatischen Schaltgetriebes (nicht dargestellt), eines Abgasturboladers 18, insbesondere eines Lagerstuhls davon, sowie von Abgas, das über eine Abgasrückführleitung (nicht dargestellt) einer Niederdruck- oder Hochdruck-Abgasrückführung rückgeführt wird.

Das Hauptkühlsystem umfasst hierzu Kühlkanäle des Zylindergehäuses 14 und des Zylinderkopfs 16, einen Motorölkühler 20, einen Getriebeölkühler 22, einen Kühler für den Abgasturbolader 18, der in Form eines Kühlkanals in einem Gehäuse des Abgasturboladers 18 ausgebildet ist, einen Kühler für ein beziehungsweise einen Kühlkanal in einem Abgasrückführventil 24 sowie einen AGR-Kühler 26, d.h. einen Wärmetauscher, der sowohl von Kühlmittel des Kühlsystems als auch von über die Abgasrückführleitung rückzuführendem Abgas durchströmt wird. Weiterhin umfasst das Hauptkühlsystem einen ersten Kühlmittelkühler 28 als Hauptkühler des Kühlsystems, eine Hauptkühlmittelpumpe 30, eine Zusatzkühlmittelpumpe 32 sowie einen Heizungswärmetauscher 34. Der Hauptkühler 28 dient dazu, das diesen durchströmende Kühlmittel durch den Übergang von Wärmeenergie auf Umgebungsluft, die den Hauptkühler 34 zeitgleich durchströmt, rückzukühlen. Der Heizungswärmetauscher 34 dient dazu, bei Bedarf Umgebungsluft, die zur Klimatisierung eines Innenraums eines die Brennkraftmaschine 10 umfassenden Kraftfahrzeugs (gemäß der Fig. 1) vorgesehen ist, aufzuwärmen. Die Hauptkühlmittelpumpe 30 des Hauptkühlsystems wird indirekt über einen Zahnriemen 36 von einer Kurbelwelle 38 des Verbrennungsmotors 12, d.h. mechanisch, angetrieben. Dabei kann diese hinsichtlich der spezifischen (d.h. jeweils auf die Antriebsdrehzahl bezogenen) Förderleistung steuerbar oder regelbar sowie zudem abschaltbar ausgebildet sein, d.h. diese erzeugt trotz eines Antriebs keine relevante Förderleistung. Weiterhin kann vorgesehen sein, dass sowohl im angetriebenen als auch im nicht angetriebenen Zustand der Hauptkühlmittelpumpe 30 deren Durchströmung verhindert oder freigegeben ist. Die Zusatzkühlmittelpumpe 32 ist dagegen elektromotorisch antreibbar.

Die verschiedenen Wärmetauschkomponenten und Kühlmittelpumpen 30, 32 sind in verschiedene Kühlkreise des Hauptkühlsystems integriert. Eine Verteilung des mittels der Kühlmittelpumpen 30 ,32 geförderten Kühlmittels auf die verschiedenen Kühlkreise und damit die Durchströmung der einzelnen Kühlkreise kann mittels Stellvorrichtungen gesteuert werden, die eine auf einem Drehschieber beruhende Verteilvorrichtung 40, die in der Fig. 2 nur funktional dargestellt ist, weiterhin ein dem Kühlkanal des Zylindergehäuses 14 zugeordnetes, selbsttätig regelndes, erstes Thermostatventil 42 (Öffnungstemperatur: z.B. ca. 105°C) sowie ein dem Getriebeölkühler 24 zugeordnetes, selbsttätig regelndes, zweites Thermostatventil 44 (Öffnungstemperatur: z.B. ca. 75°C) umfassen. Die Stellvorrichtungen, ebenso wie die Hauptkühlmittelpumpe 30 und die Zusatzkühlmittelpumpe 32, sind mittels einer Steuerungsvorrichtung (Motorsteuergerät) 80 ansteuerbar.

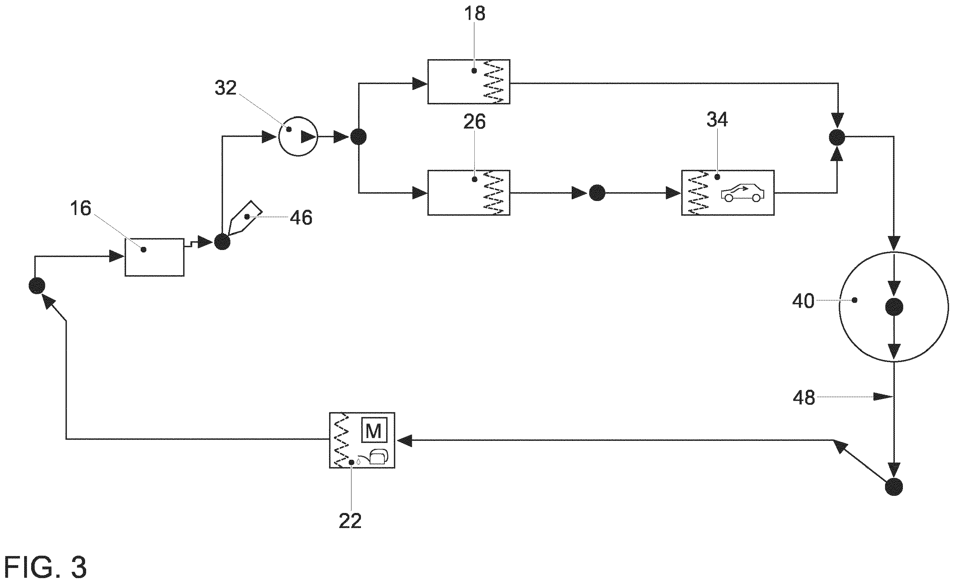

Ein erster Kühlkreis (vgl. Fig. 3) umfasst den Zylinderkopf 16, einen dem Zylinderkopf 16 zugeordneten und konkret unmittelbar auslassseitig des Zylinderkopfs 16 angeordneten, ersten Temperatursensor 46, der mit der Steuerungsvorrichtung 80 signalleitend verbunden ist, die Zusatzkühlmittelpumpe 32, den Abgasturbolader 18, den AGR-Kühler 26, den Heizungswärmetauscher 34, die Verteilvorrichtung 40 und den Motorölkühler 22. Stromab der Zusatzkühlmittelpumpe 38 teilt sich der erste Kühlkreis in zwei parallel verlaufende Stränge auf, wobei in einen ersten dieser Stränge der AGR-Kühler 26 und stromab davon der Heizungswärmetauscher 34 integriert sind, und in den zweiten Strang der Kühlkanal des Abgasturboladers 18 integriert ist.

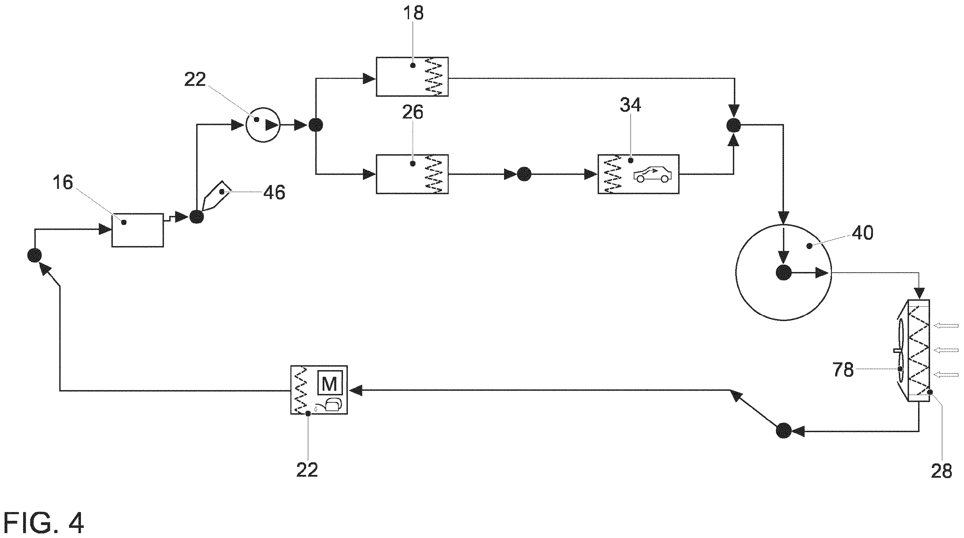

Ein zweiter Kühlkreis (vgl. Fig. 4) entspricht im Wesentlichen dem ersten Kühlkreis mit der Ausnahme, dass anstelle eines Kühlerbypasses 48, mittels dessen eine Kühlmittelströmung an dem Hauptkühler 28 vorbeigeführt werden kann, der Hauptkühler 28 in den Kühlkreis integriert ist.

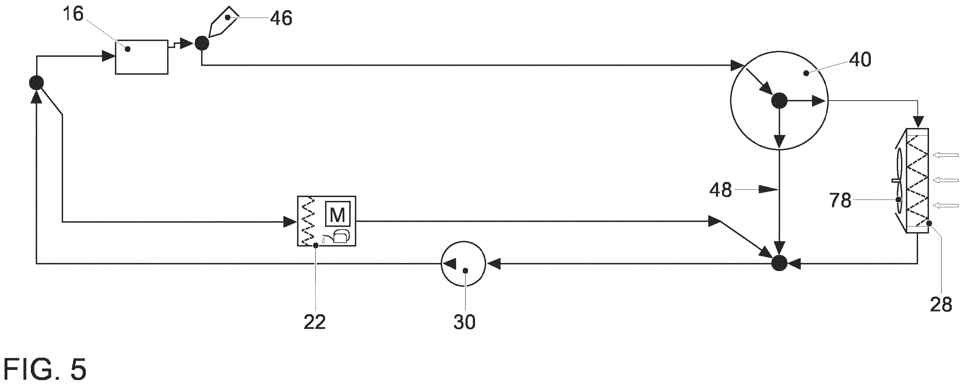

Ein dritter Kühlkreis (vgl. Fig. 5) umfasst den Zylinderkopf 16, den dem Zylinderkopf 16 zugeordneten, ersten Temperatursensor 46, die Verteilvorrichtung 40, den Hauptkühler 28, den Kühlerbypass 48, die Hauptkühlmittelpumpe 30 und den Motorölkühler 22.

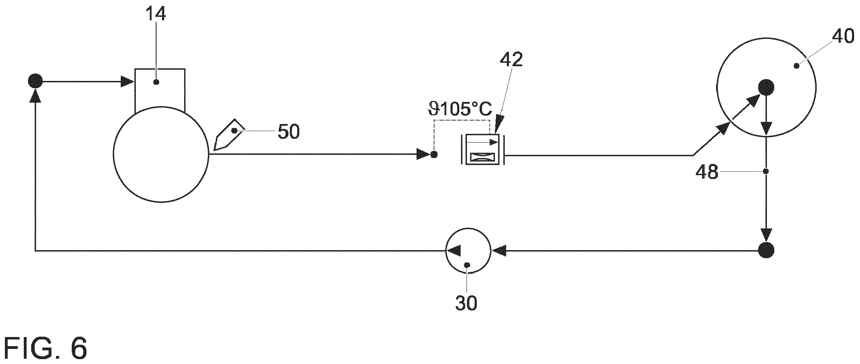

Ein vierter Kühlkreis (vgl. Fig. 6) umfasst das Zylindergehäuse 14, einen dem Kühlkanal des Zylindergehäuses 14 zugeordneten und konkret unmittelbar auslassseitig des Zylindergehäuses 14 angeordneten, zweiten Temperatursensor 50, der ebenfalls mit der Steuerungsvorrichtung 80 signalleitend verbunden ist, weiterhin das dem Kühlkanal des Zylindergehäuses 14 zugeordnete, erste Thermostatventil 42, die Verteilvorrichtung 40 und die Hauptkühlmittelpumpe 30. Das erste Thermostatventil 42, ebenso wie ein dieses erste Thermostatventil 42 umgehender Thermostatbypass 52, sind in die Verteilvorrichtung 40 integriert (vgl. Fig. 2), wobei der Thermostatbypass 52 mittels des Drehschiebers der Verteilvorrichtung 40 bedarfsweise versperrt oder freigegeben werden kann.

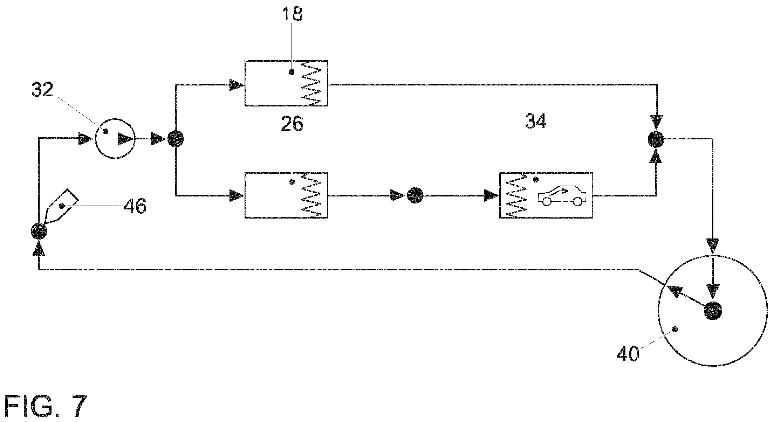

Ein fünfter Kühlkreis (vgl. Fig. 7) umfasst die Zusatzkühlmittelpumpe 32, den Abgasturbolader 18, den AGR-Kühler 26, den Heizungswärmetauscher 34 und die Verteilvorrichtung 40.

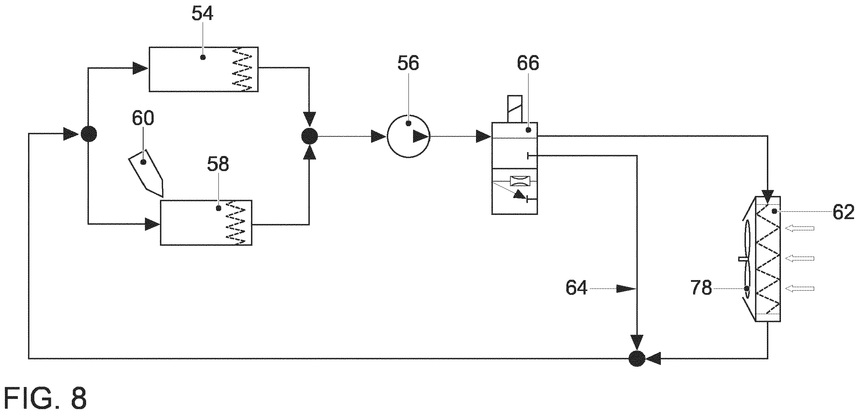

Das Nebenkühlsystem dient einer Kühlung des zumindest mittels eines Verdichters des Abgasturboladers 18 aufgeladenen Frischgases (Ladeluft), das dem Verbrennungsmotor 12 über einen Frischgasstrang (nicht dargestellt) der Brennkraftmaschine 10 zugeführt wird. Weiterhin dient das Nebenkühlsystem einer Kühlung eines Dosierventils 54, mittels dessen ein Reduktionsmittel in Abgas, das einen Abgasstrang (nicht dargestellt) der Brennkraftmaschine 10 durchströmt, eingebracht werden kann, um mittels selektiver katalytischer Reduktion eine Verringerung von Schadstoffen, insbesondere von Stickoxiden, des Abgases zu erreichen. Der zur Kühlung der Ladeluft vorgesehene Ladeluftkühler 58 und der zur Kühlung des Dosierventils 54 vorgesehene Kühlkanal sind in zwei parallele Stränge eines sechsten Kühlkreises (vgl. auch Fig. 8) des (Gesamt-)Kühlsystems integriert. Dem Ladeluftkühler 58 ist dabei einlassseitig ein dritter Temperatursensor 60 zugeordnet. Weiterhin ist in den sechsten Kühlkreis in demjenigen Abschnitt, der nicht in die zwei parallelen Stränge aufgeteilt ist, eine elektromotorisch antreibbare Nebenkühlmittelpumpe 56 sowie ein zweiter Kühlmittelkühler (Zusatzkühler) 62, der der Rückkühlung des den (sechsten) Kühlkreis des Nebenkühlsystems durchströmenden Kühlmittels dient, integriert. Der Zusatzkühler 62 ist mittels eines Kühlerbypasses 64 umgehbar, wobei eine Aufteilung des den Kühlkreis des Nebenkühlsystems durchströmenden Kühlmittels auf entweder den Zusatzkühler 62 oder den dazugehörigen Kühlerbypass 64 mittels eines Steuerventils 66 veränderbar ist.

Eine Ansteuerung der Nebenkühlmittelpumpe 56 und des Steuerventils 66 erfolgt wiederum mittels der Steuerungsvorrichtung 80, der auch die Messsignale des dritten Temperatursensors 60 übermittelt werden.

Die Temperatur des Kühlmittels ist während eines Warmbetriebs der Brennkraftmaschine 10 in dem Hauptkühlsystem zumindest abschnittsweise deutlich höher als in dem Nebenkühlsystem, so dass ersteres auch als Hochtemperaturkühlsystem und letzteres als Niedertemperaturkühlsystem bezeichnet werden kann.

Das Kühlsystem umfasst weiterhin einen Ausgleichsbehälter 68 (vgl. Fig. 2), der teilweise mit dem Kühlmittel und teilweise mit Luft gefüllt ist. Über eine Verbindungsleitung 70, die aus einem das Kühlmittel aufnehmenden (unteren) Abschnitt des Ausgleichsbehälters 68 abgeht, ist der Ausgleichsbehälter 68 sowohl mit dem Hauptkühlsystem als auch mit dem Nebenkühlsystem fluidleitend verbunden. Weiterhin verbinden Entlüftungsleitungen 72 unter Zwischenschaltung entweder eines Rückschlagventils 74 oder einer Drossel 76 die Kühlkreise des Hauptkühlsystems und des Nebenkühlsystems mit dem Luft aufnehmenden (oberen) Abschnitt des Ausgleichsbehälters 68.

Das Hauptkühlsystem des Kühlsystems gemäß der Fig. 2 kann folgendermaßen betrieben werden.

Während eines ersten Abschnitts einer Warmlaufphase des Verbrennungsmotors 12, die als eine Kaltstart-Warmlaufphase bezeichnet wird und während der das Kühlmittel insbesondere aufgrund eines zuvor erfolgten Kaltstarts des Verbrennungsmotors 12 eine mittels des ersten Temperatursensors 46 gemessene Temperatur aufweist, die noch unterhalb eines ersten Grenzwerts (z.B. 90°C) liegt, ist vorgesehen, eine Durchströmung der Hauptkühlmittelpumpe 30 zu verhindern. Während dieser Kaltstart-Warmlaufphase wird eine Förderung von Kühlmittel in dem Hauptkühlsystem ausschließlich mittels der Zusatzkühlmittelpumpe 32, die mit variabler Förderleistung betrieben werden kann, bewirkt. Dabei wird in Verbindung mit einer ersten Stellung der Verteilvorrichtung 40 Kühlmittel in dem ersten Kühlkreis mit beispielsweise einem (Gesamt-)Volumenstrom von ca. 10 l/min gefördert. Das Kühlmittel durchströmt dabei den Kühlkanal des Abgasturboladers 18, den AGR-Kühler 26 und den Heizungswärmetauscher 34. Weiterhin durchströmt das Kühlmittel den ebenfalls einen Abschnitt des ersten Kühlkreises darstellenden Kühlerbypass 48, weiterhin den Motorölkühler 20 (in einer Strömungsrichtung, die zu derjenigen in einem Warmbetrieb der Brennkraftmaschine 10 entgegengesetzt ist; vgl. Pfeilspitze in der Fig. 2 ohne Füllung) sowie den Kühlkanal des Zylinderkopfs16. Eine Durchströmung auch des Kühlkanals des Zylindergehäuses 14 ist dabei vollständig verhindert. In Abhängigkeit von der Temperatur des den ersten Kühlkreis durchströmenden Kühlmittels wird während der Kaltstart-Warmlaufphase mittels des zweiten Thermostatventils 44 eine Durchströmung des Getriebeölkühlers 28 zumindest anfangs verhindert.

Bei einem Betrieb des Hauptkühlsystems basierend auf der ersten Stellung der Verteilvorrichtung 40 kann die insbesondere in dem Zylinderkopf 16 und in dem Abgasturbolader 18 anfallende Wärmeenergie in vorteilhafter Weise genutzt werden, um infolge eines Wärmetauschs in dem Heizungswärmetauscher 34 ein möglichst schnelles Aufwärmen eines Innenraums des Kraftfahrzeugs sowie eine definierte Temperierung des AGR-Kühlers 26 zu erreichen. Gleichzeitig wird eine Durchströmung des Kühlkanals des Zylindergehäuses 14 verhindert, wodurch für dieses ein möglichst schnelles Aufwärmen erreicht werden kann, da Wärmeenergie, die aus von den Zylindern begrenzten Brennräumen in das Zylindergehäuse 14 übergegangen ist, nicht mittels Kühlmittels, das den Kühlmittelkanal 22 des Zylindergehäuses 14 durchströmt hat, abgeführt wird.

Die erste Stellung der Verteilvorrichtung 40 kann auch in vorteilhafter Weise dazu genutzt werden, um ein Temperieren des Innenraums des Kraftfahrzeugs während eines Nichtbetriebs des Verbrennungsmotors 12 zu realisieren, was aufgrund einer automatischen Start-Stopp-Funktionalität des Verbrennungsmotors 12 oder auch nach einem manuellen Beendigen des Betriebs des Verbrennungsmotors 12 vorgesehen sein kann. Dabei wird die in den weiterhin durchströmten Komponenten des Hauptkühlsystems gespeicherte Wärmeenergie, die bei der Durchströmung auf das Kühlmittel übergegangen ist, in vorteilhafter Weise in dem Heizungswärmetauscher 34 zum Aufwärmen der zur Temperierung des Innenraums des Kraftfahrzeugs genutzten Umgebungsluft verwendet. Ein Unterschied dieses Nachheizbetriebs im Vergleich zu der Kaltstart-Warmlaufphase kann darin liegen, dass die Hauptkühlmittelpumpe 30 zumindest in einem relativ geringen Maße durchströmt wird, während dies für den ersten Abschnitt der Warmlaufphase nicht vorgesehen ist.

Während eines zweiten Abschnitts der Warmlaufphase ist eine zweite Stellung der Verteilvorrichtung 40 eingestellt. Dabei wird ein Teil der von dem Zylinderkopf 16 kommenden Kühlmittelströmung unter Umgehung des Heizungswärmetauschers 34 durch den Kühlerbypass 48 geführt. Dadurch kann bereits eine relevante Kühlleistung für den Zylinderkopf 16 realisiert werden, so dass dann schon drohende lokale thermische Überlastungen des den Zylinderkopf 16 durchströmenden Kühlmittels sicher verhindert werden können. Dazu kann auch vorgesehen sein, dass in der zweiten Stellung der Verteilvorrichtung 40 eine Durchströmung der von dem Verbrennungsmotor 12 angetriebenen Hauptkühlmittelpumpe 30 freigegeben und deren Förderleistung so eingestellt ist, dass ein ausreichender Mengenstrom des Kühlmittels durch den Zylinderkopf 16 von beispielsweise ca. 50 l/min eingestellt ist. Eine Durchströmung des Hauptkühlers 28 ist auch in der zweiten Stellung der Verteilvorrichtung 40 nicht vorgesehen, da die in das Kühlmittel eingebrachte Wärmeenergie dann noch nicht durch ein Rückkühlen des Kühlmittels in dem Hauptkühler 28 abgeführt werden soll.

Der Thermostatbypass 52 wird in einer im Übrigen der zweiten Stellung entsprechenden Zusatzstellung der Verteilvorrichtung 40 freigegeben, wenn trotz eines noch relativ kalten Kühlmittels eine Durchströmung des Kühlkanals des Zylindergehäuses 14 realisiert werden soll. Dies ist insbesondere bei der Anforderung einer hohen und insbesondere maximalen Last im Betrieb des Verbrennungsmotors 12 bei noch relativ kaltem Kühlmittel (z.B. <°94°C) der Fall.

Eine dritte Stellung der Verteilvorrichtung 40, die während eines dritten Abschnitts der Warmlaufphase eingestellt wird, unterscheidet sich von der zweiten Stellung ausschließlich dahingehend, dass eine Kühlmittelströmung durch das Zylindergehäuse 14 von der Verteilvorrichtung 40 zugelassen ist. Dadurch wird zumindest eine Pilotströmung durch den Kühlkanal des Zylindergehäuses 14 ermöglicht, die dazu dient, das erste Thermostatventil 42 zu temperieren, um diesem die Möglichkeit zu geben, bei einer weiteren Erwärmung des Kühlmittels die Durchströmung des Kühlkanals des Zylindergehäuses 14 selbsttätig zu regeln.

In einer vierten Stellung der Verteilvorrichtung 40, die während eines Warmbetriebs der Brennkraftmaschine und folglich, wenn die Temperatur des Kühlmittels in dem vorgesehenen Normal-Betriebstemperaturbereich oder zumindest nicht darunter (z.B. >°94°C) liegt, eingestellt wird, wird das gesamte an der Verteilvorrichtung 40 ankommende Kühlmittel über den Hauptkühler 28 geführt. Dabei wird eine maximale Kühlleistung des Hauptkühlsystems realisiert. Diese vierte Stellung der Verteilvorrichtung 40 ist insbesondere bei einem Betrieb des Verbrennungsmotors 12 mit relativ hoher Last, insbesondere in Kombination mit einer relativ geringen Fahrgeschwindigkeit des die Brennkraftmaschine 10 umfassenden Kraftfahrzeugs und/oder bei einer relativ hohen Umgebungstemperatur und damit bei einer relativ geringen Kühlleistung des Hauptkühlers 28, vorgesehen.

In anderen Betriebszuständen der Brennkraftmaschine 10 während eines Warmbetriebs kann die in der vierten Stellung realisierte Kühlleistung so groß sein, dass damit eine Kühlung des Kühlmittels unter den vorgesehenen Betriebstemperaturbereich verbunden wäre. Um dies zu vermeiden wird die Verteilvorrichtung 40 dann in eine zwischen der dritten Stellung und der vierten Stellung liegende Zwischenstellung eingestellt, in der ein mit dem Hauptkühler 28 verbundener, erster Auslass und ein mit dem Kühlerbypass 48 verbundener, zweiter Auslass in unterschiedlichen, zueinander gegensätzlichen Ausmaßen teilweise freigegeben und teilweise versperrt sind. Dadurch kann die Rückkühlung des Kühlmittels in dem Hauptkühler 28 bedarfsgerecht gesteuert oder geregelt werden, um eine möglichst konstante Temperatur des Kühlmittels von beispielsweise ca. 95°C, gemessen mit dem dem Kühlkanal des Zylinderkopfs 16 zugeordneten, ersten Temperatursensor 46, einzustellen.

Die Verteilvorrichtung 40 kann weiterhin in eine Nullstellung eingestellt werden, in der eine von dem Zylinderkopf 16 kommende Kühlmittelströmung vollständig über den Heizungswärmetauscher 34 und anschließend den Hauptkühler 28 geführt wird. Die Nullstellung wird eingestellt, wenn während eines Nichtbetriebs nach einem vorausgegangenen Betrieb des Verbrennungsmotors 12 mit relativ hoher Last ein Nachkühlen für bestimmte Komponenten beziehungsweise Wärmequellen des Kühlsystems, insbesondere den Abgasturbolader 18 und den Zylinderkopf 16, sinnvoll ist. Hierzu wird dann mittels der Zusatzkühlmittelpumpe 32 Kühlmittel in dem zweiten Kühlkreis gemäß der Fig. 4 gefördert. Bei einem solchen Betrieb des Kühlsystems durchströmt Kühlmittel u.a. den Zylinderkopf 16 und den Abgasturbolader 18, die in dem vorangegangenen Betrieb des Verbrennungsmotors 12 thermisch hoch belastet wurden, wodurch Restwärme dieser Wärmequellen durch das Kühlmittel abgeführt und in dem ebenfalls durchströmten Hauptkühler 28 an Umgebungsluft übertragen wird. Ein dem Hauptkühler 28 zugeordnetes, elektromotorisch angetriebenes Gebläse 78 kann dabei ebenfalls betrieben werden, um eine ausreichende Abfuhr der Wärmeenergie über den Hauptkühler 28 zu gewährleisten.

Das Nebenkühlsystem und damit der sechste Kühlkreis des (Gesamt-)Kühlsystems wird bei sämtlichen beschriebenen Betriebszuständen der Brennkraftmaschine betrieben beziehungsweise genutzt.

### BEZUGSZEICHENLISTE

- 10: Brennkraftmaschine
- 12: Verbrennungsmotor
- 14: Zylindergehäuse
- 16: Zylinderkopf
- 18: Abgasturbolader
- 20: Motorölkühler
- 22: Getriebeölkühler
- 24: Abgasrückführventil
- 26: AGR-Kühler
- 28: erster Kühlmittelkühler / Hauptkühler
- 30: Hauptkühlmittelpumpe des Hauptkühlsystems
- 32: Zusatzkühlmittelpumpe des Hauptkühlsystems
- 34: Heizungswärmetauscher
- 36: Zahnriemen
- 38: Kurbelwelle des Verbrennungsmotors
- 40: Verteilvorrichtung / Stellvorrichtung
- 42: erstes Thermostatventil / Stellvorrichtung
- 44: zweites Thermostatventil / Stellvorrichtung
- 46: erster Temperatursensor
- 48: Kühlerbypass des Hauptkühlsystems
- 50: zweiter Temperatursensor
- 52: Thermostatbypass
- 54: Dosierventil
- 56: Nebenkühlmittelpumpe
- 58: Ladeluftkühler
- 60: dritter Temperatursensor
- 62: zweiter Kühlmittelkühler / Zusatzkühler
- 64: Kühlerbypass des Nebenkühlsystems
- 66: Steuerventil
- 68: Ausgleichsbehälter
- 70: Verbindungsleitung
- 72: Entlüftungsleitung
- 74: Rückschlagventil
- 76: Drossel
- 78: Gebläse
- 80: Steuerungsvorrichtung

## Patentansprüche

1. Kühlsystem mit jeweils einer Mehrzahl von Komponenten in Form von Wärmequellen, Kühlmittelpumpen (30, 32, 56), Stellvorrichtungen (40, 42, 44) und Temperatursensoren (46, 50, 60), die über Kühlmittelleitungen fluidleitend miteinander verbunden sind, wobei eine Mehrzahl von Kühlkreisen, die jeweils mindestens eine der verschiedenen Komponenten umfassen, ausgebildet sind, und mit einer Steuerungsvorrichtung (80), die signalleitend mit zumindest einem der Temperatursensoren (46, 50, 60), mit zumindest einer der Kühlmittelpumpen (30, 32, 56) und mit zumindest einer der Stellvorrichtungen (40, 42, 44) verbunden ist, **dadurch gekennzeichnet, dass** in der Steuerungsvorrichtung (80)
- Informationen über die Zuordnung der einzelnen Komponenten zu den verschiedenen Kühlkreisen sowie deren konkrete Anordnung relativ zueinander in den einzelnen Kühlkreisen,
- Informationen darüber, welche der Kühlmittelpumpen (30, 32, 56) im Betrieb einen Kühlmittelstrom in den einzelnen Kühlkreisen bewirkt,
- Informationen darüber, mittels welcher oder welchen Stellvorrichtungen (40, 42, 44) ein Mengenstrom des Kühlmittels durch die einzelnen Wärmequellen einstellbar ist; und
- Informationen über jeweils eine Solltemperatur für die Wärmequellen gespeichert sind, wobei die Steuerungsvorrichtung (80) derart ausgebildet ist, dass diese automatisch durch entsprechende Ansteuerung der jeweiligen Kühlmittelpumpe(n) (30, 32, 56) und Stellvorrichtung(en) (40, 42, 44) einen zur Erreichung der Solltemperaturen erforderlichen Mengenstrom von Kühlmittel durch die Wärmequellen einstellt.

2. Kühlsystem gemäß Anspruch 1, **dadurch gekennzeichnet, dass** dieses in mehreren alternativen Betriebszuständen betreibbar ist, in denen verschiedene der Kühlkreise durchströmt werden, wobei für jeden der Betriebszustände die entsprechenden Informationen in der Steuerungsvorrichtung (80) gespeichert sind.

3. Kühlsystem gemäß Anspruch 2, **dadurch gekennzeichnet, dass** die Steuerungsvorrichtung (80) derart ausgebildet ist, dass diese in Abhängigkeit von Messwerten der Temperatursensoren (46, 50, 60) die verschiedenen Betriebszustände automatisch einstellt.

4. Kühlsystem gemäß einem der vorhergehenden Ansprüche, **dadurch gekennzeichnet, dass** dieses
- als Wärmequellen mehrere oder alle der folgenden Komponenten: einen Zylinderkopf (16) eines Verbrennungsmotors (12), ein Zylindergehäuse (14) des Verbrennungsmotors (12), einen Abgasturbolader (18), einen AGR-Kühler (26), einen Motorölkühler (20), einen Getriebeölkühler (22), einen Ladeluftkühler(58), ein Dosierventil (54) für ein Reduktionsmittel; und
- als Wärmesenken mehrere oder alle der folgenden Komponenten: einen oder mehrere Kühlmittelkühler (28, 62), einen Heizungswärmetauscher (34)
umfasst.

5. Kühlsystem gemäß Anspruch 4, **gekennzeichnet durch**
- einen ersten Kühlkreis, der mehrere oder alle der folgenden Komponenten: den Zylinderkopf (16), einen dem Zylinderkopf (16) zugeordneten ersten Temperatursensor (46), den Abgasturbolader (18), den AGR-Kühler (26), den Heizungswärmetauscher (34), eine Zusatzkühlmittelpumpe (32), den Motorölkühler (20);
- einen zweiten Kühlkreis, der mehrere oder alle der folgenden Komponenten: den Zylinderkopf (16), den dem Zylinderkopf (16) zugeordneten ersten Temperatursensor (46), den Abgasturbolader (18), den AGR-Kühler (26), den Heizungswärmetauscher (34), die Zusatzkühlmittelpumpe (32), den Motorölkühler (20), den oder einen ersten der Kühlmittelkühler (28);
- einen dritten Kühlkreis, der mehrere oder alle der folgenden Komponenten: den Zylinderkopf (16), den dem Zylinderkopf (16) zugeordneten ersten Temperatursensor (46), den Motorölkühler (20), den (ersten) Kühlmittelkühler (28), eine Hauptkühlmittelpumpe (30);
- einen vierten Kühlkreis, der mehrere oder alle der folgenden Komponenten: das Zylindergehäuse (14), einen dem Zylindergehäuse (14) zugeordneten zweiten Temperatursensor (50), ein dem Zylindergehäuse (14) zugeordnetes Thermostatventil (42), die Hauptkühlmittelpumpe (30); und
- einen fünften Kühlkreis, der mehrere oder alle der folgenden Komponenten: den Abgasturbolader (18), den AGR-Kühler (26), den Heizungswärmetauscher (34), die Zusatzkühlmittelpumpe (32)
umfasst.

6. Kühlsystem gemäß Anspruch 5, **gekennzeichnet durch** einen sechsten Kühlkreis, der mehrere oder alle der folgenden Komponenten: den Ladeluftkühler (58), das Dosierventil (54), eine Nebenkühlmittelpumpe (56), einen zweiten Kühlmittelkühler (62) umfasst.

7. Kühlsystem gemäß Anspruch 6, **dadurch gekennzeichnet, dass** die Kühlkreise 1 bis 5 ein erstes Teilkühlsystem und der sechste Kühlkreis ein zweites Teilkühlsystem ausbilden, wobei das erste Teilkühlsystem und das zweite Teilkühlsystem voneinander separiert sind.

8. Brennkraftmaschine (10) mit einem Verbrennungsmotor (12) und mit einem Kühlsystem gemäß einem der vorhergehenden Ansprüche.

9. Verfahren zum Betreiben einer Brennkraftmaschine (10) gemäß Anspruch 8 mit einem Kühlsystem gemäß Anspruch 2 oder 3 und gemäß einem der Ansprüche 5 bis 7, **dadurch gekennzeichnet, dass**
- entweder der erste Kühlkreis oder der zweite Kühlkreis und zusätzlich gegebenenfalls der sechste Kühlkreis genutzt wird/werden, wenn der Verbrennungsmotor (12) nicht betrieben wird;
- der erste Kühlkreis und gegebenenfalls der sechste Kühlkreis genutzt wird/werden, wenn der Verbrennungsmotor (12) in einer Kaltstart-Warmlaufphase, d.h. bei einer unter einem Grenzwert liegenden Temperatur des Kühlmittels am Kühlmittelauslass des Zylinderkopfs (16) und mit einer unter einem Grenzwert liegenden Lastanforderung, betrieben wird; und
- die Kühlkreise 3 bis 5 und gegebenenfalls der sechste Kühlkreis genutzt werden, wenn der Verbrennungsmotor (12) in einem von der Kaltstart-Warmlaufphase abweichenden Betriebszustand betrieben wird.

10. Verfahren gemäß Anspruch 9, wobei die Brennkraftmaschine (10) zusätzlich gemäß Anspruch 6 oder 7 ausgebildet ist, **dadurch gekennzeichnet, dass** der sechste Kühlkreis genutzt wird, wenn der Verbrennungsmotor (12) nicht und/oder in der Kaltstart-Warmlaufphase und/oder in einem von der Kaltstart-Warmlaufphase abweichenden Betriebszustand betrieben wird.
